# EUROPEAN PATENT SPECIFICATION

(11) **EP 2 123 099 B1**
(45) Date of publication and mention of the grant of the patent: **15.09.2010**
(21) Application number: 08701814.9
(22) Date of filing: 16.01.2008
(51) Int. Cl.: H04W 36/30, H04W 72/04

(54) **HANDOVER OF WIRELESS CONNECTIONS**
WEITERREICHUNG VON DRAHTLOSEN VERBINDUNGEN
TRANSFERT INTERCELLULAIRE DE CONNEXIONS SANS FIL

(30) Priority: 15.02.2007 EP 07250618
(43) Date of publication of application: 25.11.2009
(73) Proprietor: BRITISH TELECOMMUNICATIONS public limited company, London EC1A 7AJ (GB)
(72) Inventor: REID, Gidon Moshe, Devon PL20 7RS (GB); WISELY, David Roger, Suffolk IP9 2UD (GB); TURNBULL, Rory Stewart, Suffolk IP4 5PW (GB)
(74) Representative: Lidbetter, Timothy Guy Edwin
(86) International application number: PCT/GB2008/000136
(87) International publication number: WO 2008/099133

(56) References cited:
- EP-A2- 0 472 511
- WO-A-01/16788
- WO-A-2007/004846
- WO-A1-01/76162

## Description

This invention relates to the field of handover of wireless connections, and in particular in the field of data connections using heterogeneous links). IEEE standard 802.21 describes a protocol to support handover between heterogenous access technologies (including fixed networks, eg Ethernet, and wireless networks), based on using various triggers to assist in the decision on when to effect a handover. Predictive triggers provide advanced warnings on loss of signal including information on the likelihood of the signal being lost. Connection Managers use this information to do a make-before-break connection to another suitable network.

A typical handover system is described in International Patent Specification WO0176162 (Ericsson), in which the user device makes decisions on handover based on triggers on signal quality on the network on which it is currently working.

It can also interrogate an Information Server on the network using the current access method to "discover" what other networks are available and their capabilities (bandwidth, QoS etc). The network also has a connection management function, co-operating with that in the user device. This performs operations based on the same information, but from a network perspective, for example for load balancing purposes. Such operations include the timing of the handover process in order to minimise the risk of data loss. Although such handover protocols ensure that service is not lost altogether, there may be a difference in quality between the old and new connections. For example, the new connection may be significantly slower than the previous one. Such loss of quality may be inconvenient for the user, and make it difficult, or even impossible, to continue with the task he is engaged upon. There are also situations in which no handover is possible, and connection is lost altogether.

The present invention proposes the use of predictive triggers to mitigate the effects of such impairment or loss of signal on a current network.

According to a first aspect of the invention, there is provided a communications terminal having a handover control system to establish initiate a handover request from an existing connection to a new connection of a communications network, characterised in that the handover control system includes a probing system to identify the capabilities of a new connection to which a handover is to be performed when the communications network has heterogeneous access links, and to determine whether said capabilities will result in degradation of the connection, and to trigger processes which maximise the utilisation of the existing connection to the network in advance of such degradation.

According to another aspect of the invention, there is provided a communications network comprising a connection management system to establish communication with a plurality of terminals, to respond to handover requests from a first terminal , characterised in that the communications network has heterogeneous access links, and the connection management system has means to identify whether the capabilities of the connection to which a terminal is to be handed over will result in a degradation of the connection, and having the capability for limiting or suspending data feeds to other terminals to allow provision of maximum bandwidth to the first terminal in advance of the expected degradation of the signal.

The network may be configured to respond to a handover request from a terminal, and has means to identify whether the capabilities of the connection to which the terminal is to be handed over will result in an degradation of the signal. Alternatively, it may monitor the signal quality itself to determine that such degradation is imminent.

The invention also provides a method of controlling handover of a connection between a communications terminal and a communications network having heterogeneous access links, characterised in that on detection of imminent handover of the terminal from a first connection to a second connection expected to result in a degradation of connection quality, a trigger is generated to cause the utilisation of the first connection to be maximised in advance of such handover.

Unless the context clearly demands otherwise, in this specification the term "degradation", relating to a signal, relates to a loss of some or all of the available bandwidth.

The terminal may use the temporarily enhanced capability to identify data that is likely to be required by the user and buffer it for subsequent retrieval after the degradation has occurred. The data in question, and the manner of its identification, will depend on the type of service the user is accessing. In one particular embodiment, a web browser is configured to identify addresses linked to the web page currently being displayed by the device. The web browser may, alternatively or in addition, identify addresses frequently accessed by the user, for example from the "bookmark" or "history" functions of a browser, and access those addresses for caching. In an alternative embodiment, the streaming rate of a video is increased to provide an increased amount of data in the buffer store. To further optimise the use of the available bandwidth, elements of the streamed data may be omitted such that the duration of the data stored in the buffer store is maximised.

It should be understood that on many data links, the available bandwidth is normally only used for very brief periods: for example a user may download a document using a web browser at a very high data rate, and then spend several minutes studying it, during which time no data is being transferred at all. It is this intermittent nature of much data communications that allows a large number of users to be served by the same network: conflicts between users contending for the same resource are relatively rare and transient. Consequently, the network may be able to support the rapid download required by the user terminal to generate the buffer when detecting imminent loss of connectivity without modification. However, in a preferred arrangement, the network has means for suspending data feeds to other users, or limiting their data rates, to allow provision of maximum bandwidth to the user experiencing the degrading signal, to maximise the amount that can be downloaded.

In such an arrangement, it is desirable that the network itself monitors the signal quality to ensure that such degradation is indeed imminent. This will prevent terminals simulating a degradation in order to achieve a greater bandwidth, at the expense of other users. The network may also have provision to apportion bandwidth between a number of terminals all requesting maximum bandwidth for caching purposes. Such apportionment may take account of recent activity, and of the bandwidth availability in the respective network connections to which the users are to be handed over.

The invention may incorporate provision to encourage or advise users to remain in range to continue the existing connection, or to delay transfer. This may be implemented by artificially exaggerating the degradation of the output perceived by the user, to persuade the user to remain in range of the original connection. This would have the additional advantage of saving battery power, as the handset would continue to receive a stronger signal for a longer time.

An embodiment of the invention will now be described by way of example only and with reference to the accompanying drawings in which
Figure 1 is a schematic representation of a user device according to the invention:
Figure 2 is a schematic representation of the relevant elements of the network that interact with the user device of Figure 1
Figure 3 is a flow diagram representing the processes performed by the invention

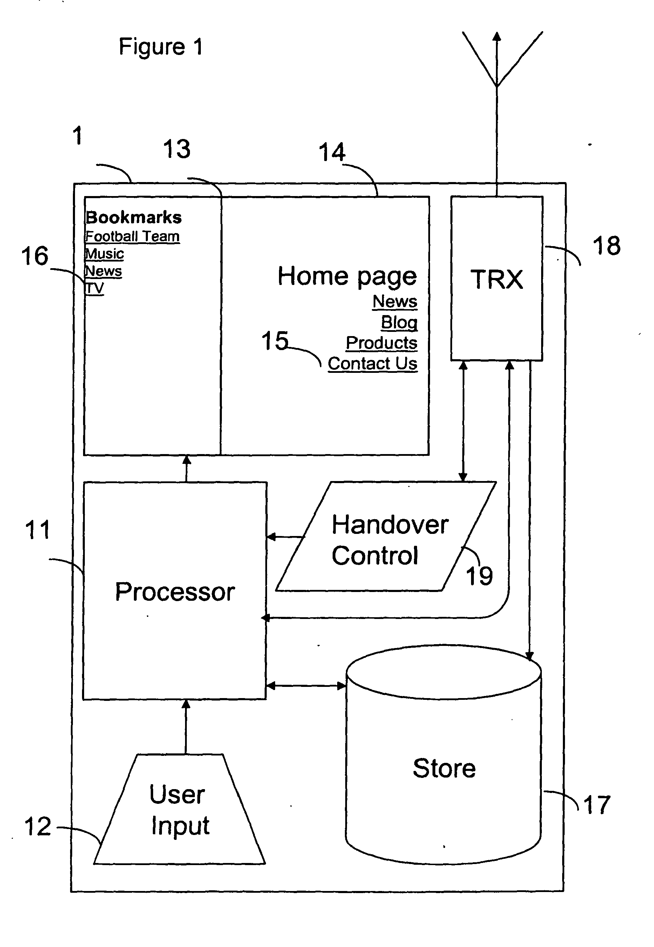

Figure 1 depicts a user device 1 equipped for wireless communication. It has a central processor 11, a user input device 12 (such as a keypad) and a user output device 13 (such as a display screen). Other input and output devices may be provided as well or instead, such as microphones and loudspeakers.

The output device 13 is depicted displaying a web page 14 incorporating several hyperlinks 15, and also a set of other links 16 such as those accessed frequently and/or recently by the user. The handset also incorporates a memory 17.

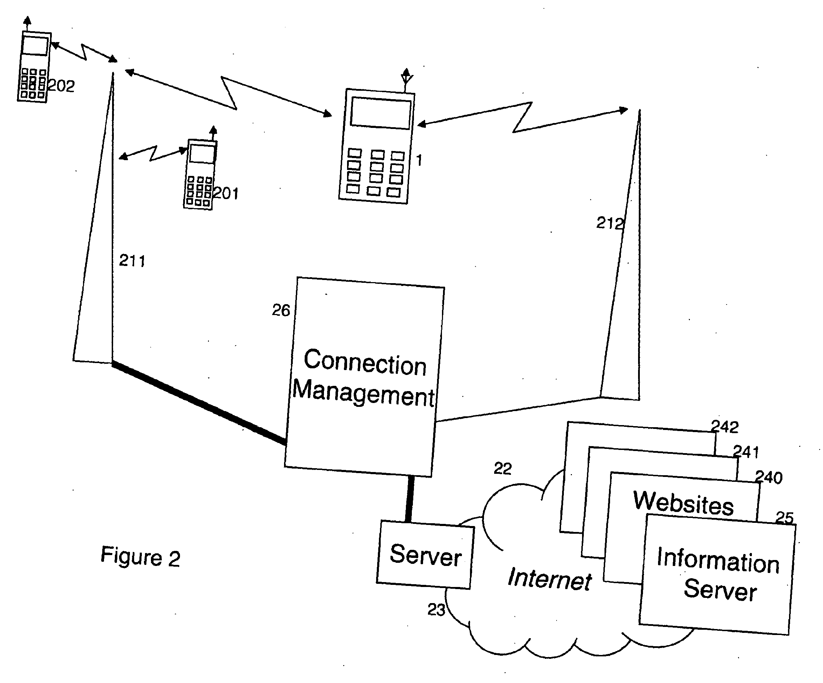

Interaction with a communications network is provided by means of a transceiver 18. Requests for data generated using the input device 12 are transmitted through the transceiver 18 to a communications network 2 (to be discussed with reference to Figure 2) and data returned in response to the request is processed 11 for display on the display 13, for example as a web page 14. Address data relating to the links 15, 16 are extracted by the processor 11 and stored in the memory 17.

A handover control system 19 monitors the quality of the communications link between the device 1 and the network 2, and attempts to initiate a handover to a different communication links should a more suitable one be identified.

Figure 2 depicts the user device 1, along with two other user devices 201, 202, in wireless communication with a fixed transceiver 211. It should be noted that the other user devices 201, 202 may be conventional - the network elements of the invention can operate conventionally with existing user handsets.

The fixed transceiver 211 is one of several (e.g. transceiver 212) through which the user device 1 may communicate with a server 23, giving access through the internet 22 or a similar access network to a number of different data sources 240, 241, 242. In this schematic, both transceivers 211, 212 and the server 23 are connected using the same Connection Manager 26, but this is not necessarily the case, and there may be more than one such connection manager involved. Indeed, the transceivers may operate on different systems, such as a wireless LAN (local area network) and a GPRS public cellular system. These systems may, of course, have very different bandwidth availability and it is the existence of such differences which make the invention of particular utility.

The connection management system 26 directs handover of the user handset 1 between fixed transceivers 211, 212, in response to signal quality measurements made on the respective wireless links between those transceivers and the handset 1, and in response to requests for the connection management system 19 of the user handset 1. The connection manager has knowledge of all the current sessions connected through it, and the ability to modify them accordingly, for example by re-negotiating current SIP sessions for example for load balancing purposes. A *Session Initiation Protocol (SIP)* is used for establishing, modifying and terminating multimedia sessions. Inside the SIP message on setting up a call (using the INVITE method), is a session description (SDP - Session Description Protocol). This session description defines the parameters of the call - for example codec, bit-rate used. During a call it is possible to modify these parameters by sending a "re-INVITE" message.

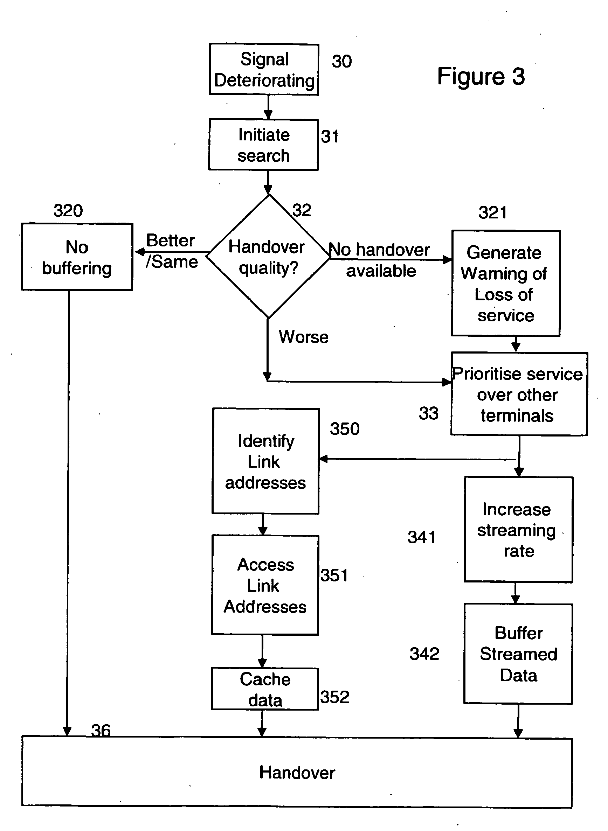

The method of operation of the invention will now be described with reference to Figure 3.

When the handset 1 receives triggers of the signal deteriorating (30), it probes an entity accessible through the Internet called an Information Server (IS) 25. The information Server holds information on other networks available based on the user's location as provided by the user. This Information Server is defined in the 802.21 spec. On identifying a transceiver 212 through which a potential new connection may be made, a decision is taken (step 32) as to whether buffering is required. Should the bandwidth be as good, or even better, than that required for the task currently in hand, the handover (36) proceeds as normal, and no buffering is required (320).

Should no suitable connection be available to hand over to, the user is warned (321) of an impending loss of service, allowing him to take remedial action if possible, such as remaining in, or returning to, the area of adequate coverage. Such loss of service may be because no transceivers are within range, or because the only available ones cannot support the service currently being used.

Whether service is to be impaired or lost altogether, the connection management system 26 co-operates with the handover control 19 of the handset 1 to download as much data as possible before the handover or loss of service occurs. Firstly, the connection management system 26 prioritises the handset 1 over any other terminals 201, 202 (step 33). This allocates to the connection between the fixed transceiver 211 and the handset 1 the maximum bandwidth that the handset capable of supporting. The bandwidth is made available by sending a "re-INVITE" to other handsets defining new (lower) parameters. This may temporarily impair the service to other handsets 201, 202, but the loss will be brief and, typically, will be evenly distributed amongst several such handsets.

Two different scenarios are illustrated in Figure 3 for the way this prioritised capacity is used. In the first scenario (steps 341, 342), the handset 1 is being used for streaming data. In this situation the streaming rate is increased to the maximum the handset can handle, and the data is buffered in the store 17. If it is detected that either the estimated time available before the signal is lost, or the capacity of the buffer 17, is inadequate to complete the transmission, the quality of the streamed signal may be reduced to one requiring less bandwidth - for example by removal of colour-difference signals (so that graphics are generated in monochrome) or error correction data. This effectively increases the duration of the data stored in the buffer, by retaining only the most essential data.

This reduction in quality may occur before the signal is actually impaired - indeed it will in general occur during the period of enhanced bandwidth. This exaggeration of the rate of impairment of the output to the user has the effect of warning the user that the signal quality is about to deteriorate, so that he may, if he has the opportunity, take remedial action to remain in, or return to, the region of good signal quality.

This can also be achieved by the re-invite process already discussed. On receiving the predictive triggers for imminent signal loss, the connection manager in the user device may re-negotiate the session using downgraded parameters - more, or earlier, than is required - to suggest to the user that he should, if possible, return to an area with better signal coverage.

In the second scenario (steps 350, 351, 352) the handset 1 is being used to browse "web" pages. In this situation the handset 1 interfaces with a web accelerator such as that provided by Google, which pre-fetches certain pages onto the computer in advance. The processor 11, currently connected to a site 240, identifies the addresses 241, 242, associated with the links 15, 16 that are most likely to be accessed next by the user (350). These addresses 241, 242 are accessed through the web server 22 (step 351) in anticipation of the user input 12. Again, the maximum bandwidth is allocated to the handset (step 33) for the duration of this caching process (351).. The data downloaded from these sites 241, 242 is buffered in the handset memory 17 (step 352) until an actual request is made by the user input 12, when it can be loaded to the display 13.

Handover 36 (or disconnection) may then take place, with the user having obtained the maximum data transfer possible on the old connection. Connection to the other handsets 201, 202 may then be restored to their normal level.

## Claims

1. A communications terminal (1) having a handover control system (19) to initiate a handover request from an existing connection (211) to a new connection (212) of a communications network (26), **characterised in that** the handover control system includes a probing system configured to identify the capabilities of a new connection to which a handover is to be performed when the communications network (26) has heterogeneous access links, and to determine whether said capabilities will result in degradation of the connection, and to maximise the utilisation of the existing connection to the network in advance of such degradation.

2. A communications terminal according to claim 1, including a processor (11) configured to identify data that is likely to be required by the user, and incorporate a web browser to access such data, and a memory (17) configured to buffer such data for subsequent retrieval.

3. A communications terminal according to claim 2, wherein the web browser is configured to identify addresses linked to the web page (14) currently being displayed by the device.

4. A communications terminal according to claim 2, wherein the web browser is configured to identify addresses stored in the device and to access those addresses for buffering.

5. A communications terminal according to claim 1, wherein the handover control system (19) includes means to trigger an increase in the streaming rate of a streamed transmission when imminent degradation of signal is identified.

6. A communications terminal according to claim 5, wherein the processor (11) includes means to remove elements of the streamed data such that the duration of the data stored in the buffer store (17) is maximised.

7. A communications terminal according to any preceding claim, the processor configured to degrade the perceived call quality on the connection (211) on which degradation is imminent in advance of the actual degradation in signal quality.

8. A communications network (26, 211, 212) comprising a connection management system (26) to establish communication with a plurality of terminals (1, 201, 202), to respond to handover requests from a first terminal (1), **characterised in that** the communications network has heterogeneous access links, and the connection management system has means to identify whether the capabilities of the connection (212) to which a terminal is to be handed over will result in a degradation of the connection, and being configured to limit or suspend data feeds to other terminals (201, 202) to allow provision of maximum bandwidth to the first terminal (1) in advance of the expected degradation of the signal.

9. A communications network according to claim 8, wherein the network has means to monitor the signal quality to determine that such degradation is imminent.

10. A communications network according to claim 8 or 9, having provision to apportion bandwidth between a plurality of terminals (1, 201, 202) all requesting maximum bandwidth, according to the amount of recent activity on each connection, and the bandwidth availability in the respective network connections to which the users are to be handed over.

11. A method of controlling handover of a connection between a communications terminal (1) and a communications network (26, 211, 212) having heterogeneous access links, **characterised in that** on detection of imminent handover of the terminal from a first connection to a second connection expected to result in a degradation of connection quality (32), causing the utilisation of the first connection to be maximised (350-352, 341) in advance of such handover (36).

12. A method according to claim 11, degrading the perceived call quality on the connection on which degradation is imminent in advance of the actual degradation in signal quality.

13. A method according to claim 11 or 12, wherein data that is likely to be required by the user of the terminal is identified (350) and accessed (351), and such data is buffered (352) in the terminal (1) for subsequent retrieval.

14. A method according to claim 13, wherein addresses linked to the web page (14) currently being displayed by the terminal (1) are accessed by the terminal for caching.

15. A method according to claim 14, wherein recently- or frequently-used addresses stored in the user terminal device are accessed by the terminal for buffering.

16. A method according to claim 11, wherein the streaming rate of a transmission is increased (341) when imminent degradation of signal is identified (30, 32).

17. A method according to claim 16, wherein elements of the streamed data are omitted such that the duration of the data received by the terminal (1) is maximised.

18. A method according to any of claims 11 to 17, wherein the network (26) limits or suspends data feeds to terminals (201, 202) other than the terminal on which imminent degradation has been detected (33), to allow provision of maximum bandwidth on the connection experiencing the degrading signal.

19. A method according to claim 18, wherein bandwidth is apportioned between a plurality of terminals (1, 201, 202) all requesting maximum bandwidth, according to the amount of recent activity on each connection, and of the bandwidth availability in the respective network connections to which the users are to be handed over.

## Patentansprüche

1. Kommunikationsendgerät (1) mit einem Weiterreichungssteuersystem (19) zum Initiieren einer Weiterreichungsanfrage von einer vorhandenen Verbindung (211) an eine neue Verbindung (212) eines Kommunikationsnetzes (26), **dadurch gekennzeichnet, dass** das Weiterreichungssteuersystem ein Sondierungssystem einschließt, das dazu konfiguriert ist, die Fähigkeiten einer neuen Verbindung zu identifizieren, an die eine Weiterreichung durchgeführt werden soll, wenn das Kommunikationsnetz (26) heterogene Zugriffsverbindungen aufweist, und zu bestimmen, ob die Fähigkeiten zu einer Verschlechterung der Verbindung führen, und die Verwendung der vorhandenen Verbindung zum Netz vor einer solchen Verschlechterung zu maximieren.

2. Kommunikationsendgerät nach Anspruch 1, mit einem Prozessor (11), der dazu konfiguriert ist, Daten zu identifizieren, die wahrscheinlich vom Benutzer angefordert werden, und einen Webbrowser zu beinhalten, um auf solche Daten zuzugreifen, und einem Speicher (17), der dazu konfiguriert ist, solche Daten für einen anschließenden Abruf zu puffern.

3. Kommunikationsendgerät nach Anspruch 2, wobei der Webbrowser dazu konfiguriert ist, Adressen zu identifizieren, die mit der Webseite (14), die von der Vorrichtung gerade angezeigt wird, verknüpft sind.

4. Kommunikationsendgerät nach Anspruch 2, wobei der Webbrowser dazu konfiguriert ist, Adressen zu identifizieren, die in der Vorrichtung gespeichert sind, und auf jene Adressen zur Pufferung zuzugreifen.

5. Kommunikationsendgerät nach Anspruch 1, wobei das Weiterreichungssteuersystem (19) Mittel zum Auslösen einer Erhöhung der Streaming-Rate einer gestreamten Übertragung einschließt, wenn eine bevorstehende Signalverschlechterung identifiziert wird.

6. Kommunikationsendgerät nach Anspruch 5, wobei der Prozessor (11) Mittel zum Entfernen von Elementen der gestreamten Daten einschließt, so dass die Dauer der im Pufferspeicher (17) gespeicherten Daten maximiert wird.

7. Kommunikationsendgerät nach irgendeinem vorhergehenden Anspruch, wobei der Prozessor dazu konfiguriert ist, die wahrgenommene Anrufqualität bei der Verbindung (211), bei der die Verschlechterung bevorsteht, vor der tatsächlichen Verschlechterung der Signalqualität zu verschlechtern.

8. Kommunikationsnetz (26, 211, 212), mit einem Verbindungsmanagementsystem (26) zum Herstellen einer Kommunikation mit mehreren Endgeräten (1, 201, 202), um auf Weiterreichungsanfragen von einem ersten Endgerät (1) zu antworten, **dadurch gekennzeichnet, dass** das Kommunikationsnetz heterogene Zugriffsverbindungen aufweist und das Verbindungsmanagementsystem Mittel zum Identifizieren hat, ob die Fähigkeiten der Verbindung (212), an die ein Endgerät weitergereicht werden soll, zu einer Verschlechterung der Verbindung führen, und wobei es dazu konfiguriert ist, Dateneingaben in andere Endgeräte (201, 202) zu begrenzen oder auszusetzen, um die Bereitstellung einer maximalen Bandbreite für das erste Endgerät (1) vor der erwarteten Verschlechterung des Signals zu erlauben.

9. Kommunikationsnetz nach Anspruch 8, wobei das Netz Mittel zum Überwachen der Signalqualität hat, um zu bestimmen, dass eine solche Verschlechterung bevorsteht.

10. Kommunikationsnetz nach Anspruch 8 oder 9, das die Bereitstellung zum Zuteilen einer Bandbreite zwischen mehreren Endgeräten (1, 201, 202), die alle eine maximale Bandbreite anfordern, nach Maßgabe des Betrags der kürzlichen Aktivität bei jeder Verbindung und der Bandbreitenverfügbarkeit in den jeweiligen Netzverbindungen, an die die Benutzer weitergereicht werden sollen, aufweist.

11. Verfahren zum Steuern der Weiterreichung einer Verbindung zwischen einem Kommunikationsendgerät (1) und einem Kommunikationsnetz (26, 211, 212), das heterogene Zugriffsverbindungen hat, **dadurch gekennzeichnet, dass** es bei Erfassung einer bevorstehenden Weiterreichung des Endgeräts von einer ersten Verbindung zu einer zweiten Verbindung, von der erwartet wird, dass sie zu einer Verschlechterung der Verbindungsqualität (32) führt, bewirkt, dass die Verwendung der ersten Verbindung vor einer solchen Weiterreichung (36) maximiert (350-352, 341) wird.

12. Verfahren nach Anspruch 11, das die wahrgenommene Anrufqualität bei der Verbindung, bei der die Verschlechterung bevorsteht, vor dem tatsächlichen Verschlechtern der Signalqualität verschlechtert.

13. Verfahren nach Anspruch 11 oder 12, wobei Daten, die wahrscheinlich vom Benutzer des Endgeräts angefordert werden, identifiziert (350) werden und auf sie zugegriffen (351) wird, und solche Daten im Endgerät (1) für einen nachfolgenden Abruf gepuffert (352) werden.

14. Verfahren nach Anspruch 13, wobei auf Adressen, die mit der Webseite (14), die gerade vom Endgerät (1) angezeigt wird, verknüpft sind, von dem Endgerät zum Cachen zugegriffen wird.

15. Verfahren nach Anspruch 14, wobei auf kürzlich oder häufig verwendete Adressen, die in der Benutzer-Endgerätvorrichtung gespeichert sind, vom Endgerät zur Pufferung zugegriffen wird.

16. Verfahren nach Anspruch 11, wobei die Streaming-Rate einer Übertragung erhöht (341) wird, wenn eine bevorstehende Signalverschlechterung identifiziert (30, 32) wird.

17. Verfahren nach Anspruch 16, wobei Elemente der gestreamten Daten weggelassen werden, so dass die Dauer der vom Endgerät (1) empfangenen Daten maximiert wird.

18. Verfahren nach irgendeinem der Ansprüche 11 bis 17, wobei das Netz (26) Dateneingaben in andere Endgeräte (201, 202) als dem Endgerät, bei dem eine bevorstehende Verschlechterung erfasst (33) worden ist, begrenzt oder aussetzt, um eine Bereitstellung einer maximalen Bandbreite bei der Verbindung, die das sich verschlechternde Signal erfährt, zu erlauben.

19. Verfahren nach Anspruch 18, wobei die Bandbreite zwischen mehreren Endgeräten (1, 201, 202), die alle eine maximale Bandbreite anfordern, nach Maßgabe des Betrags der kürzlichen Aktivität bei jeder Verbindung und nach der Bandbreitenverfügbarkeit in den jeweiligen Netzverbindungen, an die die Benutzer weitergereicht werden sollen, zugeteilt wird.

## Revendications

1. Terminal de communication (1) muni d'un système de contrôle de transfert intercellulaire (19) pour le lancement d'une requête de transfert intercellulaire à partir d'une connexion existante (211) vers une nouvelle connexion (212) d'un réseau de communication (26), **caractérisé en ce que** le système de contrôle de transfert intercellulaire comprend un système de scrutation configuré pour identifier les possibilités d'une nouvelle connexion vers laquelle un transfert intercellulaire doit être réalisée dans le cas où le réseau de communication (26) présente des liaisons d'accès hétérogènes, et pour déterminer si lesdites possibilités vont avoir pour résultat une dégradation de la connexion, et pour maximiser l'utilisation de la connexion existante au réseau en avance d'une telle dégradation.

2. Terminal de communication selon la revendication 1, comprenant un processeur (11) configuré pour identifier des données dont l'utilisateur est susceptible d'avoir besoin, et pour incorporer un navigateur Web afin d'accéder à de telles données, et une mémoire (17) configurée pour mettre de telles données en mémoire tampon pour récupération ultérieure.

3. Terminal de communication selon la revendication 2, dans lequel le navigateur Web est configuré pour identifier des adresses présentant des liens avec la page Web (14) en cours d'affichage par le dispositif.

4. Terminal de communication selon la revendication 2, dans lequel le navigateur Web est configuré pour identifier des adresses stockées dans le dispositif, et pour accéder à ces adresses pour mise en mémoire tampon.

5. Terminal de communication selon la revendication 1, dans lequel le système de contrôle de transfert intercellulaire (19) comprend des moyens pour déclencher une augmentation de la vitesse de diffusion en flux continu d'une transmission diffusée en flux continu lors de l'identification d'une dégradation imminente de signal.

6. Terminal de communication selon la revendication 5, dans lequel le processeur (11) comprend des moyens pour supprimer des éléments des données diffusées en flux continu de sorte que la durée des données stockées dans la mémoire tampon (17) est maximisée.

7. Terminal de communication selon l'une quelconque des revendications précédentes, le processeur configuré pour provoquer une dégradation de la qualité d'appel perçue sur la connexion (211) sur laquelle une dégradation est imminente en avance de la dégradation réelle de qualité de signal.

8. Réseau de communication (26, 211, 212) comprenant un système de gestion de connexion (26) pour établir une communication avec une pluralité de terminaux (1, 201, 202) pour répondre à des requêtes de transfert intercellulaire à partir d'un premier terminal (1), **caractérisé en ce que** le réseau de communication présente des liaisons d'accès hétérogènes, et le système de gestion de connexion présente des moyens pour identifier si les possibilités de la connexion (212) vers laquelle un terminal va être transféré aura pour résultat une dégradation de la connexion, et ayant configuration pour limiter ou suspendre des diffusions de données vers d'autres terminaux (201, 202) pour permettre la fourniture de bande passante maximale au premier terminal (1) en avance de la dégradation attendue du signal.

9. Réseau de communication selon la revendication 8, dans lequel le réseau présente des moyens de surveillance de la qualité de signal pour déterminer qu'une telle dégradation est imminente.

10. Réseau de communication selon la revendication 8 ou 9, présentant des moyens pour l'affectation de bande passante entre une pluralité de terminaux (1, 201, 202) demandant tous une bande passante maximale, en fonction de la quantité d'activité récente sur chaque connexion, ainsi que la disponibilité de bande passante dans les connexions respectives du réseau vers lesquelles les utilisateurs vont être transférés.

11. Procédé de contrôle de transfert intercellulaire d'une connexion entre un terminal de communication (1) et un réseau de communication (26, 211, 212) présentant des liaisons d'accès hétérogènes, **caractérisé en ce que**, suite à la détection d'une dégradation de qualité de connexion (32) attendue en résultat du transfert intercellulaire imminent du terminal depuis une première connexion vers une deuxième connexion, l'utilisation de la première connexion est maximisée (350-352, 341) en avance d'un tel transfert intercellulaire (36).

12. Procédé selon la revendication 11, avec dégradation de la qualité perçue d'appel sur la connexion sur laquelle la dégradation est imminente en avance de la dégradation réelle de la qualité du signal.

13. Procédé selon la revendication 11 ou 12, dans lequel des données dont l'utilisateur du terminal est susceptible d'avoir besoin sont identifiées (350) et accédées (351), et de telles données sont mises en mémoire tampon (352) dans le terminal (1) pour récupération ultérieure.

14. Procédé selon la revendication 13, dans lequel le terminal accède aux adresses présentant des liens avec la page Web (14) en cours d'affichage par le terminal (1) pour mise en mémoire cache.

15. Procédé selon la revendication 14, dans lequel le terminal accède à des adresses utilisées récemment ou fréquemment, stockées dans le dispositif terminal de l'utilisateur, pour mise en mémoire tampon.

16. Procédé selon la revendication 11, dans lequel la vitesse de diffusion en flux continu d'une transmission est augmentée (341) lors de l'identification (30, 32) d'une dégradation imminente de signal.

17. Procédé selon la revendication 16, dans lequel des éléments des données diffusées en flux continu sont omis de façon à maximiser la durée des données reçues par le terminal (1).

18. Procédé selon l'une quelconque des revendications 11 à 17, dans lequel le réseau (26) limite ou suspend des diffusions de données vers des terminaux (201, 202) autres que le terminal sur lequel une dégradation imminente a été détectée (33), pour permettre d'assurer une bande passante maximale sur la connexion présentant la dégradation du signal.

19. Procédé selon la revendication 18, dans lequel la largeur de bande est affectée entre une pluralité de terminaux (1, 201, 202) demandant tous une bande passante maximale, en fonction de la quantité d'activité récente sur chaque connexion, ainsi que la disponibilité de bande passante dans les connexions respectives du réseau vers lesquelles les utilisateurs vont être transférés.
